Europäisches Patentamt

European Patent Office

Office européen des brevets

(11) Veröffentlichungsnummer: **0 026 892**
**A1**

(12) # EUROPÄISCHE PATENTANMELDUNG

(21) Anmeldenummer: **80105868.6**

(22) Anmeldetag: **27.09.80**

(51) Int. Cl.³: **C 08 F 8/20, C 08 C 19/14**

(30) Priorität: **06.10.79 DE 2940587**

(43) Veröffentlichungstag der Anmeldung: **15.04.81**
**Patentblatt 81/15**

(84) Benannte Vertragsstaaten: **BE DE FR GB IT LU NL SE**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Nowy, Günther, Dr., Hans-Fischer-Strasse 4, D-8906 Gersthofen (DE)**
Erfinder: **Häberlein, Harald, Dr., Schlesierstrasse 2, D-8906 Gersthofen (DE)**

(54) **Verfahren zur Isolierung von Poly-alpha-Olefinchlorierungsprodukten aus ihren Lösungen in Chlorkohlenwasserstoffen.**

(57) Die Erfindung betrifft ein Verfahren zur Isolierung von Poly-$\alpha$-Olefinchlorierungsprodukten aus ihren Lösungen in Chlorkohlenwasserstoffen, nach welchem man Produkte mit einem Rest-Lösungsmittelgehalt von unter 0,1 Gew.% erhalten kann. Man geht in der Weise vor, daß den von Chlorwasserstoff befreiten Lösungen bis zu 20 Gew.%, bezogen auf deren Festkörpergehalt, eines aliphatischen, gegebenenfalls bis auf 22 Gew.% anchlorierten $C_{10}$- bis $C_{40}$-Kohlenwasserstoffs zugesetzt werden und man sodann das Lösungsmittel auf übliche Art durch Behandeln mit Heißwasser und/oder Dampf entfernt.

HOECHST AKTIENGESELLSCHAFT HOE 79/F 820    Dr.MB/Lr    0026892

Verfahren zur Isolierung von Poly-α-Olefinchlorierungsprodukten
aus ihren Lösungen in Chlorkohlenwasserstoffen

Bei der Herstellung von löslichen Chlorierungsprodukten aus
Homo- bzw. Copolymeren von α-Olefinen durch Chlorieren in chlorbeständigen Lösungsmitteln wie z. B. Tetrachlorkohlenstoff,
Trichlorethylen, Chloroform oder Tetrachlorethan in Gegenwart
von Wasser ist ein wichtiger Verfahrensschritt ihre Isolierung
aus den entstehenden Reaktionslösungen.

Sie erfolgt im allgemeinen und am einfachsten durch Behandeln
der Lösungen mit heißem Wasser und/oder Wasserdampf, wobei das
Lösungsmittel - meist Tetrachlorkohlenstoff - abdestilliert
oder abgeblasen wird. Die resultierenden wasserfeuchten chlorierten Polymeren werden sodann in üblicher Weise getrocknet.

Die nach diesen Methoden erhaltenen Produkte enthalten auch
nach der Trocknung noch ca. 6 bis 10 Gew.-% Tetrachlorkohlenstoff inkludiert, der sich weder durch Wasserdampfdestillation
noch durch intensiveres Trocknen z. B. im Vakuum weiter entfernen läßt.

Aus gewerbehygienischen Gründen ist es jedoch notwendig, den
Gehalt an chlorhaltigen Lösungsmitteln in den Chlorierungsprodukten so weit wie möglich herabzusetzen, um zu vermeiden, daß
bei der technischen Anwendung dieser Substanzen als Lackkörper
in Anstrichsystemen diese Reste der chlorhaltigen Lösungsmittel
bei langsamem Trocknen der Anstriche in toxischen Mengen freigesetzt werden.

Zur Lösung dieser Aufgabe sind bereits eine Reihe von Vorschlägen
gemacht worden, so sind Verfahren bekannt, nach welchen Produkte
mit niedrigem Tetrachlorkohlenstoffgehalt in der Weise erhalten
werden, daß man die Chlorierlösung in einen Nichtlöser für das
chlorierte Polymere, wie z. B. niedrige Alkohole oder flüssige
aliphatische Kohlenwasserstoffe, einlaufen läßt, wobei das Chlorierungsprodukt ausgefällt wird (z. B. DE-AS 1 520 126). Nachteilig sind die sehr großen Mengen an Fällungsmittel, die zusammen mit dem Lösungsmittel wieder aufgearbeitet werden müssen, was häufig große Schwierigkeiten bereitet, da, beispielsweise im Falle der Verwendung von Methanol als Fällungsmittel, dieses mit Tetra ein Azeotrop bildet. Des weiteren ist bereits vorgeschlagen worden, bei der Behandlung der Lösung des Chlorierungsproduktes mit heißem Wasser und/oder Dampf oberflächenaktive Substanzen zuzufügen (US-PS 3 005 812) oder auch den Chlorierlösungen vor der Wasserdampfbehandlung Polymere mit niedrigen Einfriertemperaturen, Weichmacher, Lackharze oder sog. Polymerschmiermittel zuzusetzen (DE-OSS 2 641 591, 2 652 448, 2 704 332, 2 359 461, 2 619 523). Derartige Zusätze sind in vielen Fällen bei der Anwendung der Chlorierungsprodukte unerwünscht oder störend, sie erweisen sich häufig als zum Teil unverträglich und verursachen oft schon bei der Isolierung und Trocknung der Verfahrensprodukte Schwierigkeiten.

Ein weiterer Vorschlag betrifft die nachträgliche Behandlung von in vorstehend beschriebener Weise isolierten Chlorierungsprodukten mit dem Dampf von weniger toxischen, niedriger siedenden Chlorkohlenwasserstoffen (DE-OS 2 649 754). Diese Arbeitsweise ist mit hohen apparativem Aufwand verbunden und stellt wegen der nur graduell geringeren Giftigkeit der "Hilfs-Chlorkohlenwasserstoffe" keine befriedigende Lösung dar.

Schließlich ist auch schon vorgeschlagen worden, trockene oder auch wasserfeuchte, chlorhaltige Polymere in chlorfreien Lösungsmitteln wie Toluol, Methylethylketon usw. umzulösen oder wieder aufzulösen, aus der Lösung den Chlorkohlenwasserstoff destillativ zu entfernen und in einem weiteren Verfahrensschritt durch ein nochmaliges Behandeln der chlorfreien Lösung mit heißem Wasser und/oder Wasserdampf Produkte in der gewünschten Qualität zu isolieren (DE-PS 1 191 836). Dieses Verfahren ist zwar sehr wirksam, jedoch außerordentlich aufwendig, da die Verfahrensschritte im Vakuum durchgeführt werden müssen, um eine thermische Belastung der Produkte zu vermeiden. Die in großer Menge anfallenden Lösungsmittelgemische müssen anschließend wieder destillativ getrennt werden.

Es wurde nun gefunden, daß es auf außerordentlich einfache Weise gelingt, chlorierte Polymere mit dem gewünschten niedrigen Restgehalt an chlorhaltigem Lösungsmittel zu erhalten, wenn man die Lösung des Chlorierungsproduktes in dem chlorhaltigen Lösungsmittel in an sich bekannter Weise mit heißem Wasser und/oder Dampf aufarbeitet, ihr jedoch vorher eine gewisse Menge eines aliphatischen, gegebenenfalls anchlorierten Kohlenwasserstoffes zusetzt.

Die vorliegende Erfindung betrifft daher ein Verfahren zur Isolierung von Poly-α-Olefin-Chlorierungsprodukten aus ihren Lösungen in chlorierten Kohlenwasserstoffen, wobei Feststoffe mit einem Gehalt von weniger als 1 Gew.-% an dem chlorierten Kohlenwasserstoff resultieren und wobei man den in an sich bekannter Weise durch Umsetzen der entsprechenden chlorfreien Polymeren mit Chlor in einem chlorbeständigen, organischen Lösungsmittel in Gegenwart oder Abwesenheit von Wasser erhaltenen Chlorierungsansätzen nach der Entfernung des entstandenen Chlorwasserstoffes das Lösungsmittel in ebenfalls bekannter Weise durch Behandeln mit heißem Wasser und/oder mit Wasserdampf entzieht, welches dadurch gekennzeichnet ist, daß man den Lösungen der Poly-α-Olefin-chlorierungsprodukte vor der Heißwasser- und/oder Wasserdampfbehandlung einen aliphatischen, gesättigten oder ungesättigten Kohlenwasserstoff mit 10 bis 40 Kohlenstoffatomen und einem Chlorgehalt von 0 bis 22 Gew.-% oder ein Gemisch derartiger Kohlenwasserstoffe in einer Menge von 2 bis 20 Gew.-%, bezogen auf chloriertes Polymeres, zusetzt.

Es war überraschend und nicht vorhersehbar, daß durch die erfindungsgemäßen Zusätze, in denen die chlorierten Polymeren praktisch unlöslich und mit denen sie im allgemeinen auch unverträglich sind, eine Entfernung von Lösungsmittelresten mit außerordentlich gutem Erfolg möglich ist, und man somit unter geringstem Aufwand, schon bei Einsatz kleiner Mengen an den Zusätzen, Produkte mit einem Restlösungsmittelgehalt von unter 0,1 Gew.-% erhalten kann.

Beispiele für chlorierte Polymere, die nach einem Chlorierungsverfahren in Wasser und Lösungsmittel oder in Lösungsmittel allein mit gasförmigem oder auch flüssigem Chlor hergestellt worden sind, und in der erfindungsgemäßen Weise behandelt werden können, sind z. B. Chlorierungsprodukte von Dienkautschuken, Polyisopren, Polybutadien, Polyethylen, Ethylen-Propylen-Mischpolymerisaten und insbesondere von Polypropylen.

Beispiele für zuzusetzende aliphatische Kohlenwasserstoffe sind gesättigte oder ungesättigte Kohlenwasserstoffe mit 10 bis 40 C-Atomen, die geradkettig, verzweigt oder auch cycloaliphatischer Natur sein können. Genannt seien z. B. Decan, Undecan, Pentadecan, Docosan, Triacontan, Cyclododecan, Decen, Hexadecen, Docosen, Tridecen, Heptadecen, Tricosen sowie Gemische derartiger Kohlenwasserstoffe, wie beispielsweise technische n-Paraffinschnitte mit 10 bis 13 oder 14 bis 17 C-Atomen, Weichparaffine und $\alpha$-Olefinfraktionen mit z. B. 20 bis 24 C-Atomen.

Beispiele für chlorhaltige Kohlenwasserstoffe mit einem Chlorgehalt von allerdings nicht mehr als 22 % sind z. B. Decylchlorid, Dodecylchlorid, Eicosylchlorid, Pentadecylchlorid.

Selbstverständlich können auch Gemische aus chlorfreien Kohlenwasserstoffen, aus chlorhaltigen Kohlenwasserstoffen sowie aus chlorfreien und chlorhaltigen Kohlenwasserstoffen verwendet werden. Die Gesamtmenge der Zusätze beträgt im allgemeinen 2 bis 20, vorzugsweise 5 bis 15 und insbesondere 8 bis 12 Gew.-%, bezogen auf das in Lösung befindliche chlorierte Polymere.

Die erfindungsgemäße Arbeitsweise soll durch nachstehende Beispiele erläutert werden.

Beispiel 1

Eine Lösung von 200 g chloriertem Polypropylen (71 % Chlorgehalt; Viskosität 8 mPas, gemessen in 20 %iger Lösung in Toluol bei 20 ℃ im Höppler-Viskosimeter) in 650 g Tetrachlorkohlenstoff wird mit 10 g eines Weichparaffins vom Erweichungspunkt 30 bis 35 ℃ (5 Gew.-%) versetzt und in ca. 10 Liter siedenes Wasser eingetragen, wobei ein Gemisch aus Wasser und Lösungsmittel abdestilliert und Chlorpolypropylen ausfällt. Dieses wird abfiltriert und im Vakuumtrockenschrank bei 80 ℃ getrocknet.

Zur Bestimmung des in dem Chlorpolypropylen noch enthaltenen Tetrachlorkohlenstoffes wird eine Probe in Toluol gelöst und diese Lösung gaschromatographiert.

Der Restgehalt an Tetrachlorkohlenstoff betrug 0,05 Gew.-%.

Vergleichsbeispiel

Eine Lösung von 200 g chloriertem Polypropylen (70,5 % Chlorgehalt) und einer Viskosität von 11 mPas in 800 g Tetrachlorkohlenstoff wird wie vorstehend angegeben, jedoch  o h n e  Weichparaffinzusatz aufgearbeitet. Man gewinnt ein Produkt, das noch ca. 9,2 Gew.-% Tetrachlorkohlenstoff enthält.

Beispiele 2 bis 13

Es wurde wie in Beispiel 1 angegeben unter Einsatz verschiedener Chlorpolypropylene, gelöst in Tetrachlorkohlenstoff, mit unterschiedlichen Zusätzen gearbeitet.

| Beispiel Nr. | Ausgangsmaterial Chlorpolypropylen Chlor-gehalt | Ausgangsmaterial Chlorpolypropylen Viskosität (mPas) | Mengen g Produkt | Mengen in g Tetra | Zusatz und dessen Menge in Gew.-% | | Rest-Tetragehalt |
|---|---|---|---|---|---|---|---|
| 2 | 70,5 | 11 | 200 | 650 | n-Paraffin $C_{14/17}$ | 7,5 | 0,2 |
| 3 | 71 | 9 | 200 | 650 | Paraffin Fp. 62/64 °C | 10 | 0,05 |
| 4 | 71 | 8 | 200 | 650 | n-Dodecen | 10 | 0,05 |
| 5 | 71 | 7 | 200 | 650 | $\alpha$-Olefin $C_{20/24}$ | 10 | 0,05 |
| 6 | 69 | 14 | 200 | 650 | n-Cetylchlorid | 10 | 0,05 |
| 7 | 69 | 14 | 200 | 650 | n-Decylchlorid | 10 | 0,6 |
| 8 | 68 | 33 | 150 | 800 | n-Paraffin $C_{14/17}$ mit 10 % Chlorgehalt | 7,5 | 0,2 |
| 9 | 66 | 41 | 150 | 800 | Weichparaffin 30/35 | 5 | 0,4 |
| 10 | 66 | 39 | 150 | 800 | dto. | 10 | 0,05 |
| 11 | 65 | 55 | 150 | 800 | n-Octadecylchlorid | 10 | 0,05 |
| 12 | 64 | 63 | 150 | 800 | n-Paraffin $C_{10/13}$ mit 10 % Chlorgehalt | 10 | 0,2 |
| 13 | 64 | 60 | 150 | 800 | n-Paraffin $C_{10/13}$ mit 20 % Chlorgehalt | 10 | 0,05 |

- 7 -                                    0026892

## Beispiel 14

Wie in Beispiel 1 angegeben, wurde die Lösung eines chlorierten Polyisoprens (150 g) in Tetrachlorkohlenstoff (800 g) unter Zugabe von 22,5 g eines n-Paraffins $C_{14}/C_{17}$ aufgearbeitet. Das Chlorpolyisopren enthielt 64 % Chlor; die Viskosität betrug 53 mPas (gemessen wie in Beispiel 1)

Man erhielt ein Produkt mit einem Tetrachlorkohlenstoffgehalt von weniger als 0,05 Gew.-%.

## Beispiel 15

Analog Beispiel 1 wurde ein chloriertes Niederdruckpolyethylen (200 g, Chlorgehalt 57 %, Viskosität 16 mPas) aus seiner Lösung in 650 g Tetrachlorkohlenstoff unter Zusatz von 16 g Octadecylchlorid isoliert. Auch hier lag der Tetrachlorkohlenstoffgehalt des erhaltenen pulverförmigen Festproduktes unter 0,05 Gew.-%.

Patentanspruch

Verfahren zur Isolierung von Poly-α-Olefin-Chlorierungsprodukten aus ihren Lösungen in chlorierten Kohlenwasserstoffen, wobei Feststoffe mit einem Gehalt von weniger als 1 Gew.-% an dem chlorierten Kohlenwasserstoff resultieren, und wobei man den in an sich bekannter Weise durch Umsetzen der entsprechenden chlorfreien Polymeren mit Chlor in einem chlorbeständigen, organischen Lösungsmittel in Gegenwart oder Abwesenheit von Wasser erhaltenen Chlorierungsansätzen nach der Entfernung des entstandenen Chlorwasserstoffs das Lösungsmittel in ebenfalls bekannter Weise durch Behandeln mit heißem Wasser und/oder mit Wasserdampf entzieht, dadurch gekennzeichnet, daß man den Lösungen der Poly-α-Olefin-Chlorierungsprodukte vor der Heißwasser- und/oder Wasserdampfbehandlung einen aliphatischen, gesättigten oder ungesättigten Kohlenwasserstoff mit 10 bis 40 Kohlenstoffatomen und einem Chlorgehalt von 0 bis 22 Gew.-% oder ein Gemisch derartiger Kohlenwasserstoffe in einer Menge von 2 bis 20 Gew.-%, bezogen auf chloriertes Polymeres, zu-setzt.

Europäisches
Patentamt

**EUROPÄISCHER RECHERCHENBERICHT**

0026892
Nummer der Anmeldung

EP 80 10 5868

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 253 032 (BAYER) <br>   * Ansprüche 1-4; Seite 3, Zeilen 10-12 * | Einziger Anspruch |
| D | & DE - A - 2 359 461 | |
| | ---- | |

**KLASSIFIKATION DER ANMELDUNG (Int. Cl.³)**

C 08 F 8/20
C 08 C 19/14

**RECHERCHIERTE SACHGEBIETE (Int. Cl.³)**

C 08 F 8/20
        8/22
C 08 C 19/14

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-01-1981 | J.C.J.J. PEETERS |

EPA form 1503.1  06.78